# EUROPÄISCHE PATENTANMELDUNG

(11) **EP 0 775 447 A2**
(43) Veröffentlichungstag der Anmeldung: **28.05.1997**
(21) Anmeldenummer: 96115178.4
(22) Anmeldetag: 20.09.1996
(51) Int. Cl.: A23G 1/20, A23G 1/28

(54) **Verfahren und Vorrichtung zur Formen von Schokoladeschalen**

(30) Priorität: 22.09.1995 DE 19535292
(71) Anmelder: WINKLER & DÜNNEBIER MASCHINENFABRIK UND EISENGIESSEREI KG, D-56564 Neuwied (DE)
(72) Erfinder: Eberhardt, Roland, 56579 Rengsdorf (DE)
(74) Vertreter: Alber, Norbert

(57) **Zusammenfassung**

Es wird ein Verfahren sowie eine Vorrichtung vorgestellt, mit deren Hilfe Schokoladeschalen zwischen einer Form und einem Stempel zur Erstarrung gebracht werden können, und dabei trotz Erzielung nur geringer Ausschußraten und leichtem Lösen der Schokoladenschale vom Stempel eine hohe Herstellungseffizienz erzielbar ist. Vor dem Einführen des Stempels, der kälter ist als die Masse, in die Masse wird eine Schicht aus Trennmittel auf dem Stempel erzeugt durch Abscheiden von dem in der gasförmigen Atmosphäre enthaltenen Trennmittel auf der mit der Masse in Berührung tretenden Teilen der Oberfläche des Stempels. Die Schicht aus Trennmittel kann auch durch mechanisches Aufbringen (Sprühen, Auftupfen, Eintauchen etc.) eines nichtgasförmigen Trennmittels erzeugt werden.

## Beschreibung

Die Erfindung betrifft ein Verfahren sowie eine Vorrichtung zum Herstellen von Schokoladenschalen aus flüssiger bzw. pastöser Masse.

Dabei wird üblicherweise die flüssige oder pastöse Schokolade oder eine schokoladeähnliche fetthaltige Masse in die entsprechende Vertiefung einer Form gegossen und anschließend ein in die Form passender Stempel soweit an die Form angenähert, daß er in die Schokoladenmasse eintaucht und nach dem Abkühlen der Schokoladenmasse eine Schokoladenschale gebildet wird, deren Wandstärke dem Abstand zwischen Form und Stempel entspricht.

Diese Vorgehensweise mittels in die Form eindringendem Stempel hat gegenüber der ohne Stempel auskommenden Schleudertechnik den prinzipiellen Vorteil, daß einerseits die Wandstärken der Schokolade genauer eingehalten werden, und andererseits nur geringfügig mehr Schokoladenmasse in die Form eingefüllt werden muß, als das Volumen der fertigen Schokoladenschale beträgt. Demgegenüber ist beim Schleuderverfahren der Verlust an zunächst eingefüllter Schokoladenmasse wesentlich größer. Diese Schokoladenmasse geht zwar meist nicht verloren, sondern wird dem Kreislauf wieder zugeführt, durch das ständige Neuerhitzen ist jedoch erheblicher Energieaufwand nötig und auch die Qualität der erzielten Schokoladenartikel verringert sich hierdurch unter Umständen.

Bei der Erzeugung mittels Form und Stempel Ist es aus der GB-PS 207 974 bereits bekannt, den Stempel von einem Kühlmittel durchströmen zu lassen, so daß das Erstarren der Schokolade im wesentlichen von dem gekühlten Stempel aus erfolgt.

Vor dem Einführen des Stempels findet zwar eine Erstarrung von der Seite der Form her statt, und der Stempel wird nicht sofort nach Einfüllen der Masse in die Form eingeführt, jedoch ist der Temperaturunterschied zwischen dem gekühlten Stempel und der Schokoladenmasse wesentlich größer, so daß die Erstarrung nach dem Einführen des Stempels hauptsächlich von diesem bewirkt wird.

Zusätzlich ist der Stempel mit einem Trennmittel überzogen, um das Lösen der fertigen Schokoladenschale vom Stempel zu erleichtern.

Weiterhin ist es aus der EP 0 589 820 A1 bekannt, bei einer gattungsgemäßen Vorgehensweise den Stempel sehr stark, nämlich vorzugsweise auf -15° C bis -30° C, herabzukühlen.

Dabei erfolgt die Einführung des Stempels unmittelbar nach Einfüllen der Schokoladenmasse in die Form, so daß die Verfestigung praktisch vollständig vom Stempel ausgeht und von diesem bewirkt wird, obgleich die Form ebenfalls kühler als die eingefüllte Schokoladenmasse ist.

Diese tiefe Temperatur des Stempels bringt natürlich den Vorteil mit sich, daß die Abkühlung und Erstarrung der Schokoladenmasse sehr schnell vor sich geht, also die Verweilzeit von Stempel und Form ineinander relativ kurz ist.

Bei weniger starken Temperaturdifferenzen zwischen der Masse einerseits und Form bzw. Stempel andererseits ist die notwendige Verweildauer wesentlich länger und unter Umständen so lang, daß zur Erzielung einer ausreichenden Effizienz des Arbeitsprozesses Stempel und Form im ineinandergreifenden Zustand, also während der Aushärtung der Schokoladenmasse, innerhalb der Maschine gemeinsam weiterbewegt werden.

Dies wirft natürlich zusätzliche Probleme auf, da durch diese Bewegung in die gerade erstarrende Schokoladenmasse naturgemäß Kräfte und Erschütterungen eingebracht werden, die zu einem mangelhaften Zusammenhalt der Schokolade im Inneren der Schokoladenschale führen oder zu einem vollständigen Bruch beim Herausnehmen der Schokoladenschale aus der Form.

Es ist daher die Aufgabe gemäß der vorliegenden Erfindung, ein Verfahren sowie eine Vorrichtung zu schaffen, mit deren Hilfe Schokoladeschalen zwischen einer Form und einem Stempel zur Erstarrung gebracht werden können, und dabei trotz Erzielung nur geringer Ausschußraten und leichtem Lösen der Schokoladenschale vom Stempel eine hohe Herstellungseffizienz erzielbar ist.

Diese Aufgabe wird durch die kennzeichnenden Merkmale der Ansprüche 1, 2 und 16 gelöst. Vorteilhafte Ausführungsformen ergeben sich aus den Unteransprüchen.

Durch die Verwendung eines Trennmittels wird prinzipiell der Ausschuß beim Ablösen der Schokoladenschale vom Stempel stark reduziert.

Aufgrund der ohnehin betriebenen Kühlung des Stempels zum Reduzieren der Verweildauer des Stempels in der Form kann diese Kühlung des Stempels zusätzlich dazu benutzt werden, einen Abscheidungsprozeß auf der Oberfläche des Stempels zu bewirken, so daß sich aus den Inhaltstoffen, die in der Atmosphäre in der Umgebung des Stempels vorhanden sind, ein Belag auf dem Stempel bildet. Dies muß natürlich wenigstens in dem Bereich der Fall sein, in dem die Stempeloberfläche anschließend mit der Schokoladenmasse in Kontakt tritt.

Als Trennmittel kann dabei z.B. Wasser verwendet werden, welches als Dampf in der Atmosphäre in der Umgebung des Stempels vorhanden ist, oder auch wiederum um Schokolade. Wie aus dem physikalischen Prinzip der Abscheidung bekannt, muß dabei die Temperatur der Stempeloberfläche unter dem Taupunkt des Gas-Flüssigkeits-Gemisches liegen, wobei die Taupunkt-Temperatur wiederum vom Sättigungsgrad des Gemisches sowie weiteren physikalischen Parametern wie Druck und Temperatur abhängt.

Insofern ist eine Abscheidung eines Trennmittels auf der Stempeloberfläche umso problemloser, je höher der Taupunkt der Athmosphäre ist und damit auch, je höher die Phasenübergangstemperatur von Flüssigphase zu Festphase des zu verwendenden Trennmittels liegt.

Bei Verwendung von Schokolade oder schokoladenähnlicher Masse, also demselben Stoff der in die Form eingefüllten Masse selbst, wird eine relativ dicke Schicht auf dem Stempel erzeugt, also zwischen 0,5 und 1 mm. Bei anderen Trennmitteln wie etwa Wasser wird die Schichtdicke des Trennmittels auf unter 0,1 mm begrenzt.

Der Vorteil der Verwendung von Schokoladenmasse als Trennmittel liegt darin, daß die Grenze zwischen Trennmittel und der in der Form gebildeten Schokoladenschale innerhalb der Schokoladenschale und damit unsichtbar zu liegen kommt, da sich die aus Schokolade bestehende Schicht des Trennmittels mit dem Rest der Schokoladenschale fest verbindet und deren Bestandteil wird. Damit ergibt sich eine qualitativ hochwertige Oberflächenstruktur der Schokoladenschale auf der dem Stempel zugewandten Seite. Zusätzlich besteht auch keine Gefahr, daß durch das verwendete Trennmittel die Süßware geschmacklich beeinflußt wird.

Trotz der Tatsache, daß bei Verwendung von Schokolade als Trennmittel sich dieses Trennmittel in fester Form auf der Oberfläche des Stempels abscheidet, im Gegensatz zu der Verwendung von z.B. Wasser als Trennmittel, wenn die Stempeltemperatur höher als 0° C liegt, löst sich diese als Trennmittel wirkende Beschichtung mit Schokolade später sehr leicht von der Oberfläche des Stempels, da aufgrund des Abscheidevorgangs eine geringere Haftung gegenüber der Stempeloberfläche gegeben ist.

Die Abscheidung kann zusätzlich verbessert werden, indem die Oberfläche des Stempels mit einer Vielzahl kleinster Erhebungen im Größenbereich von unter 1/10 mm versehen ist.

Um die Ausbildung der gewünschten Schichtdicke des Trennmittels durch Abscheiden auf dem Stempel in der richtigen Schichtdicke und in der gewünschten kurzen Zeitdauer zu realisieren, wird die Atmosphäre aktiv konditioniert im Hinblick auf Sättigungsgrad mit dem in der Atmosphäre enthaltenen Trennmittel, also etwa indem die Nachlieferung des Trennmittels in die Atmosphäre durch Verdampfen oder Versprühen etc. gesteuert wird bzw. die ständige Nachlieferung für entsprechende Zeiträume unterbrochen wird.

Eine Konditionierung ist weiterhin möglich durch Beeinflussung der übrigen den Abscheideprozeß beeinflussenden Parameter wie Temperatur oder auch Druck, wobei bei dem vorliegenden Verfahren die Beeinflussung der Temperatur im Vordergrund steht, da Form und Stempel aufgrund eines im wesentlichen kontinuierlich laufenden Herstellungsprozesses nur schwer in druckdichten Räumen gegeneinander bewegt werden können. Da üblicherweise eine Vielzahl von Formen, aber nur ein oder wenige Stempel in der Vorrichtung zum Herstellen der Schokoladenschalen eingesetzt werden, werden vorzugsweise die Formen in Transportrichtung bewegt, und dabei z.B. unter dem Stempel hindurchgeführt und dort zum Eintauchen des Stempels in die Form angehalten. Die Eintauchbewegung, also die Bewegung in Eintauchrichtung, kann dabei entweder vom Stempel oder von der Form oder von beiden gleichzeitig, vorzugsweise jedoch ausschließlich von der Form durchgeführt werden.

Dadurch ist es möglich, den Stempel vollständig unbewegt zu lassen, was einerseits für die Versorgung des Stempels mit dem ihn durchströmenden Kühlmittel Vereinfachungen ergibt, und andererseits kann auf relativ einfache Art und Weise durch Anordnung eines festen Gehäuses um den Stempel herum eine abgeschlossene Umgebung um den Stempel geschaffen werden, innerhalb derer die für das Abscheiden notwendige Atmosphäre aktiv konditioniert werden kann.

Dieses Gehäuse ist z.B. an zwei gegenüberliegenden Stirnseiten für das Ein- und Ausbringen der mit der Schokoladenmasse gefüllten Formen offen oder zu öffnen, jedoch ist der Abschluß des Raumes innerhalb des Gehäuses gegenüber der äußeren Umgebung ausreichend, um im Inneren gezielt die Parameter der Atmosphäre zu beeinflussen.

Weitere Verbesserungen lassen sich erzielen, indem beim Einfüllen der Schokoladenmasse in die Form diese nicht kälter ist als die Schokoladenmasse, so daß zunächst noch keine Erstarrung der Schokoladenmasse von der Innenkontur der Form aus stattfindet, sondern erst nach dem Eintauchen des kühleren Stempels von dem Stempel aus. Auch ein Einführen des Stempels nicht unmittelbar nach dem Einfüllen der Masse in die Form, sondern etwas zeitlich verzögert bringt Vorteile, indem dadurch zunächst eine Egalisierung der Temperatur einerseits innerhalb der Schokoladenmasse und anderseits am Übergang zwischen Schokoladenmasse und Umgebung, insbesondere der angrenzenden Flächen der Form, möglich wird.

Diese Vorgehensweise darf jedoch nicht darüber hinwegtäuschen, daß - wie bekannt - auch bei Temperaturen von um die 30° C in der flüssig-pastösen Schokoladenmasse bereits eine Kristallisation vor sich geht, was unter anderem bei der Verwendung von in der Atmosphäre enthaltener Schokolade als Trennmittel auch ein Abscheiden der Schokolade in wenigstens teilweise kristalliner Form auf der Oberfläche des Stempels bewirkt.

Wenn der Stempel beim Einfahren in die Form zwar unter Raumtemperatur, die in der Regel bei 25° C liegt, gekühlt ist, jedoch nicht unter 0° C, ergibt sich auf der einen Seite ein geringerer Energieverbrauch für die Kühlung des Stempels, auf der anderen Seite wird die Verweilzeit des Stempels in der Form nicht so stark vergrößert, daß dies wirtschaftlich nicht mehr vertretbar wäre, da die Verweilzeit nicht linear mit der Verringerung der Temperaturdifferenz zwischen Stempel und Schokoladenmasse ansteigt, sondern nur unterproportional.

Üblicherweise wird der Stempel ständig mit einer bestimmten Menge pro Zeiteinheit eines Kühlmittels bestimmter Temperatur durchflossen, und dadurch die Oberfläche des Stempels auf einer bestimmten Soll-Temperatur bei definierter Lufttemperatur der Umgebung gehalten.

Beim Einführen des Stempels wird diese Durchströmung des Stempels mit Kühlmittel weiter aufrechterhalten, durch den Kontakt mit der wesentlich wärmeren Schokoladenmasse erhöht sich jedoch die Temperatur der Oberfläche des Stempels und nimmt erst mit dem Erstarrungsvorgang der Schokoladenmasse ab. Die Soll-Temperatur wird jedoch erst nach relativ langer Zeit erreicht, so daß in der Regel schon vorher das Abnehmen der Schokoladenschale vom Stempel stattfindet, und somit die Nenn-Temperatur der Stempeloberfläche nur dann gehalten wird, wenn der Stempel nicht in Kontakt mit der Schokoladenmasse ist.

Durch entsprechende Steuerung der Kühlung des Stempels ist es jedoch auch möglich, diesen Anstieg der Oberflächentemperatur des Stempels während des Kontaktes mit der Schokoladenmasse relativ gering zu halten oder sogar ganz zu vermeiden, indem nach dem Eindringen des Stempels in die Schokoladenmasse die Kühlung verstärkt wird.

Dadurch ist es auch möglich, die Oberflächentemperatur des Stempels ab dem Inkontakttreten mit der Schokoladenmasse sogar weiter abzusenken.

Eine Ausführungsform gemäß der Erfindung ist im folgenden anhand der Figuren beispielhaft näher beschrieben. Es zeigen:
- Fig. 1:: eine perspektivische Darstellung der Vorrichtung mit Form und hiervon getrenntem Stempel und
- Fig. 2: eine ähnliche Darstellung bei in der Form verweilendem Stempel.

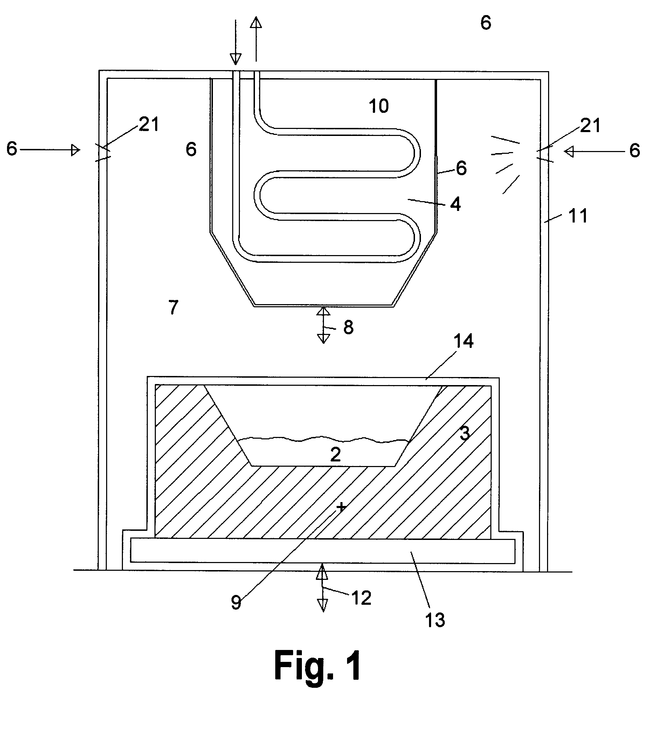

In Fig. 1 ist eine Form 3 in Querschnittsdastsellung zu erkennen, in welche bereits die schokoladenartige Masse 2 eingefüllt ist, deren Volumen nur geringfügig größer ist als das Volumen der benötigten Schokoladenschale 1.

Die Form 3 befindet sich auf einem Förderer 13, der in der Lage ist, die Form 3 in Blickrichtung der Fig. 1, also in Transportrichtung 9, zu bewegen, und auch exakt unterhalb des über der Form angeordneten Stempels 4 zu positionieren. Hierfür sind in der Regel zusätzliche Steuerungs- und Positioniervorrichtungen vorhanden.

Der Stempel 4 hat in dem gegen die Form 3 weisenden Bereich eine Außenkontur, die an die Innenkontur der Form insofern angepaßt ist, als bei Ineinandersetzen dieser Konturen dazwischen ein Abstand 5 verbleibt, die der Dimensionierung der herzustellenden Schokoladenschale entspricht.

Der Stempel 4 weist in seinem Inneren Kühlschlangen als Kühlvorrichtung 10 auf, die von einem Kühlmittel durchströmt werden können, deren Zu- und Abfluß an der Oberseite des Stempels 4 dargestellt ist.

Der Stempel ist in einem Gehäuse 11 aufgenommen, welches sich seitlich des Stempels bis zur Form 3, vorzugsweise bis einschließlich des die Form 3 tragenden Förderers 13, heraberstreckt, so daß die unterhalb des Stempels 4 positionierte Form 3 sich ebenfalls innerhalb des Gehäuses 11 befindet. Der Stempel 4 ist dabei unter der Decke des Gehäuses 11 befestigt.

Die der Transportrichtung 9 zugewandten, einander gegenüberliegenden Stirnflächen weisen dabei eine entweder ständig offene, an die Kontur der Formen 3 angepaßte, Öffnung 14 auf oder eine für den Durchlaß jeder Form separat zu öffnende Abschottung. Bei dieser Abschottung kann es sich um einen mechanischen Verschluß wie eine Klappe oder ein Tor handeln, oder auch um eine Abschottung durch Luftströmung oder ähnliches.

Bezweckt wird damit, die innerhalb des Gehäuses 11 den Stempel 4 umgebende Atmosphäre 7 von der übrigen Umgebung hinsichtlich Druck, Temperatur, Konzentration der Inhaltsstoffe etc. soweit getrennt zu halten, daß die Atmosphäre 7 gezielt hinsichtlich der gewünschten Parameter eingestellt werden kann.

Insbesondere gilt dies für die in der gasförmigen Atmosphäre 7 enthaltenen Partikel des Trennmittels 6, welches über eine geeignete Einbringungsvorrichtung 21, also z.B. eine Düse oder einen Verdampfer, gasförmig oder in feiner flüssiger oder fester Verteilung in die Atmosphäre 7 eingebracht werden kann.

Durch die Steuerung der Oberflächentemperatur des Stempels 4 lagern sich diese Partikel des Trennmittels 6 auf der Oberfläche des Stempels 4 in Form einer dünnen Schicht ab, wobei die Geschwindigkeit des Aufbaus der Trennmittelschicht von einer Vielzahl von Parametern, unter anderen der zur Verfügung stehenden Zeit für den Aufbau, abhängt.

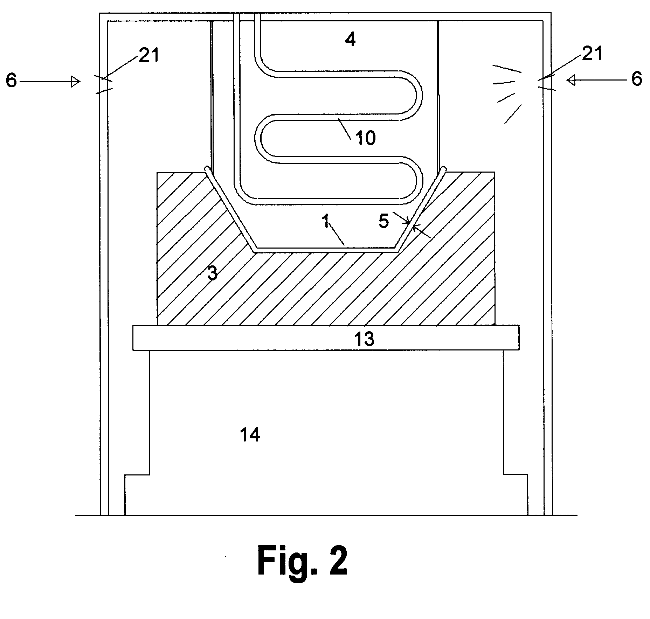

Nachdem eine ausreichend dicke Schicht des Trennmittels 6 auf der Oberfläche des Stempels 4 vorhanden ist, werden Stempel 4 und Form 3 bis auf Soll-Lage entsprechend der Wandstärke 5 der zu schaffenden Schokoladenschale 1 ineinanderbewegt und in dieser Lage solange gehalten - wie in Fig. 2 dargestellt - bis die Masse 2 zur Schokoladenschale 1 erstarrt ist.

Dabei ist der obere Rand der Form 4 in der Regel identisch mit den Soll-Abmessungen der Schokoladenschale 1, so daß der geringfügig überstehende Rand, der durch aus Sicherheitsgründen geringfügig überdimensionerte Volumen der eingegebenen Masse 2 entsteht, mechanisch mit Hilfe eines Abziehmessers, einer Abziehwalze etc. anschließend wieder entfernt wird.

Die Relativbewegung von Stempel 4 und Form 3 gegeneinander in Eintauchrichtung 8 erfolgt dabei durch eine nur symbolisch dargestellte Bewegungsvorrichtung 12, die die Form 3, vorzugsweise zusammen mit dem sie tragenden Förderer 13, gegen den Stempel 4 anhebt.

Aufgrund des auf dem Stempel 4 vorhandenen Trennmittels 6 läßt sich anschließend der Stempel 4 ohne Probleme aus der erstarrten Schokoladenschale 1 zurückziehen.

Falls als Trennmittel eine dünne, auf dem Stempel abgeschiedene und in den festen Zustand übergegangene Schicht von Schokolade verwendet wurde, verbindet sich diese beim Aushärten mit der Schokoladenschale 1 und wird zu deren Bestandteil.

Falls als Trennmittel 6 ein Stoff wie etwa Wasser verwendet wird, lagert sich dieser bei Temperaturen von unter 0° C auf der Stempeloberfläche als Eis dort ab, so daß eine sichere, durchgängige Zwischenlage zwischen der Masse 2 und dem Stempel erreicht wird. Durch die höhere Temperatur der Masse 2 beim Eintauchen verflüssigt sich dieses gefrorene Trennmittel wiederum, kann jedoch nicht so schnell entweichen, bevor die stempelnahen Bereiche der Masse 2 erkaltet sind, so daß eine zuverlässige Trennfunktion gegeben ist.

Vorzugsweise erfolgt das Aufbringen des Trennmittels nicht in Anwesenheit der Form 3, um deren Verschmutzung zu verhindern. Zu diesem Zweck kann das Aufbringen des Trennmittels auf den Stempel in einer separaten, wenigstens teilweise abgetrennten Kammer erfolgen und erst anschließend Stempel und Form in die für das Eintauchen notwendige, zueinander fluchtende Lage gebracht werden.

## Patentansprüche

1. Verfahren zur Herstellung von Schokoladeschalen (1) durch
- Einfüllen von gießfähiger, temperierter schokoladeähnlicher fetthaltiger Masse (2) in eine Form (3) und
- Einführen eines Stempels (4) in die Masse bis auf den gewünschten Wandstärken-Abstand (5) zur Form (3),
**dadurch gekennzeichnet, daß**
- vor dem Einführen des Stempels (4), der kälter ist als die Masse (2), in die Masse (2) eine Schicht aus Trennmittel (6) auf dem Stempel (4) erzeugt wird durch Abscheiden von dem in der gasförmigen Atmosphäre (7), die den Stempel (4) umgibt, enthaltenen Trennmittel (6) auf wenigstens der mit der Masse (2) in Berührung tretenden Teilen der Oberfläche des Stempels (4).

2. Verfahren zur Herstellung von Schokoladeschalen (1) durch
- Einfüllen von gießfähiger, temperierter schokoladeähnlicher fetthaltiger Masse (2) in eine Form (3) und
- Einführen eines Stempels (4) in die Masse bis auf den gewünschten Wandstärken-Abstand (5) zur Form (3),
**dadurch gekennzeichnet, daß**
- vor dem Einführen des Stempels (4), der kälter ist als die Masse (2), in die Masse (2) eine Schicht aus Trennmittel (6) auf dem Stempel (4) erzeugt wird durch mechanisches Aufbringen (Sprühen, Auftupfen, Eintauchen etc.) eines nichtgasförmigen Trennmittels (6) auf wenigstens der mit der Masse (2) in Berührung tretenden Teilen der Oberfläche des Stempels (4).

3. Verfahren nach einem der vorhergehenden Ansprüche,
**dadurch gekennzeichnet, daß**
die Atmosphäre (7) aktiv konditioniert wird, um in der vorgegebenen Zeitspanne des Verweilens des Stempels (4) in der Atmosphäre (7) vor dem Eintauchen in die Masse (2) die gewünschte Schichtdicke des Trennmittels (6) auf dem Stempel (4) zu erzeugen.

4. Verfahren nach Anspruch 3,
**dadurch gekennzeichnet, daß**
die Konditionierung durch Veränderung der Konzentration des Trennmittels (6) in der Atmosphäre (7) geschieht.

5. Verfahren nach Anspruch 3,
**dadurch gekennzeichnet, daß**
die Konditionierung durch Veränderung der Temperatur des Stempels (4) und/oder der Atmosphäre (7) geschieht.

6. Verfahren nach einem der vorhergehenden Ansprüche,
**dadurch gekennzeichnet, daß**
die Konditionierung durch Steuerung der Zufuhr von gasförmigem Trennmittel (6) in die Atmosphäre (7) bzw. Unterbrechung der Zufuhr geschieht.

7. Verfahren nach einem der vorhergehenden Ansprüche,
**dadurch gekennzeichnet, daß**
auf der Oberfläche des Stempels (4) eine Vielzahl kleinster, nebeneinanderliegender Erhebungen ausgebildet sind.

8. Verfahren nach einem der vorhergehenden Ansprüche,
**dadurch gekennzeichnet, daß**
der Stempel (4) nur in Eintauchrichtung (8) hin und zurück bewegt wird.

9. Verfahren nach einem der vorhergehenden Ansprüche,
**dadurch gekennzeichnet, daß**
die Form (3) in Transportrichtung (9) bewegt und zum Einwirken des Stempels (4) angehalten wird.

10. Verfahren nach einem der vorhergehenden Ansprüche,
**dadurch gekennzeichnet, daß**
beim Einfüllen der Masse (2) in die Form (3) die Form nicht kälter ist als die Masse (2).

11. Verfahren nach einem der vorhergehenden Ansprüche,
**dadurch gekennzeichnet, daß**
die Einführung des Stempels (4) in die Form (3) zeitversetzt nach dem Einfüllen der Masse (2) in die Form (3) geschieht.

12. Verfahren nach einem der vorhergehenden Ansprüche,
**dadurch gekennzeichnet, daß**
die Temperatur des Stempels (4) beim Einfahren in die Form (3) bzw. Masse (2) unter der Raumtemperatur, jedoch oberhalb 0° C liegt.

13. Verfahren nach einem der vorhergehenden Ansprüche,
**dadurch gekennzeichnet, daß**
der Stempel (4) nach dem Erreichen seiner Endposition in der Form (3) weiterhin in seiner Temperatur reduziert wird.

14. Verfahren nach Anspruch 13,
**dadurch gekennzeichnet, daß**
der Stempel auf Temperaturen unter 0° C herabgekühlt wird.

15. Vorrichtung zum Herstellen von Schokoladeschalen aus einer gießfähigen, temperierten, schokoladeähnlichen fetthaltigen Masse, mit
- einer Form (3),
- einem Stempel (4), welcher nach Einführen in die Form (3) auf Wandstärkenabstand (5) eine Schokoladenstärke mit dieser Wandstärke ergibt, und
- einer Kühlvorrichtung (10) für den Stempel (4),
insbesondere zur Durchführung der Verfahren nach einem der vorhergehenden Ansprüche,
**dadurch gekennzeichnet, daß**
der Stempel (4) in einem Gehäuse (11) angeordnet ist, und das Gehäuse (11) eine Einbringungsvorrichtung (21) zum Einbringen von Trennmittel (6) in die den Stempel (4) umgebende Atmosphäre (7) im Inneren des Gehäuses (11) ausgestattet ist.

16. Vorrichtung nach Anspruch 16,
**dadurch gekennzeichnet, daß**
das Gehäuse (11) an den beiden gegenüberliegenden Stirnseiten geöffnet werden kann bzw. offen ist zum Hindurchführen der Formen (3) und Vorrichtungen zum Positionieren und Anhalten der Formen (3) in einer solchen zum Stempel (4) benachbarten Lage, daß eine Relativbewegung von Stempel und Form ineinander möglich ist.

17. Vorrichtung nach einem der vorhergehenden Vorrichtungsansprüche,
**dadurch gekennzeichnet, daß**
innerhalb des Gehäuses (11) eine Bewegungsvorrichtung (12) zum Bewegen der Form (3) gegen den stillstehenden Stempel (4) vorhanden ist.
